# DEMANDE DE BREVET EUROPEEN

(11) **EP 0 860 381 A1**
(43) Date de publication de la demande: **26.08.1998**
(21) Numéro de dépôt: 98400406.9
(22) Date de dépôt: 19.02.1998
(51) Int. Cl.: B65G 1/08

(54) **Dispositif séparateur à bascule pour couloir de stockage dynamique**

(30) Priorité: 20.02.1997 FR 9702190
(71) Demandeur: SIPA Roller, 85000 Mouilleron-le-Captif (FR)
(72) Inventeur: Faisant, Gilles, 85100 Les Sables D'Olonne (FR)
(74) Mandataire: Phélip, Bruno

(57) **Abrégé**

Le dispositif séparateur comporte, en aval de la butée de séparation (5), une butée anti-recul (16) qui est normalement en position active lorsqu'une palette (12) est située au poste de prélèvement.

Cette butée (16) permet de limiter le mouvement de recul d'une palette lors de son déchargement par exemple.

## Description

La présente invention concerne les dispositifs séparateurs à bascule pour couloir de stockage dynamique et, plus particulièrement, un perfectionnement qui vise à améliorer la sécurité des personnes chargées de prélever des marchandises sur les palettes ou caisses positionnées au niveau dudit séparateur, c'est-à-dire au niveau du poste de prélèvement.

La palette qui se situe au niveau du poste de prélèvement est séparée des autres palettes stockées dans le couloir, d'un espace qui est de l'ordre de 10 à 20 cm par exemple.

Lorsque la palette est chargée, celle-ci est stable par simple gravité mais aussi parce qu'elle repose à son extrémité aval, au niveau de l'opérateur, sur le patin qui met en oeuvre la bascule avec sa butée de séparation située en amont, et maintient cette bascule en position active de séparation.

Cependant, lorsque la palette est largement déchargée, elle devient plus légère et peut se déplacer facilement à la moindre sollicitation. Ce mouvement de recul peut surprendre et déséquilibrer l'opérateur, lorsque celui-ci prend possession des dernières pièces ou paquets.

La présente invention propose un perfectionnement au dispositif séparateur pour éviter les incidents de ce type et rendre plus confortable, et surtout plus sécurisante, l'opération de prélèvement des paquets ou autres au niveau de la palette située au poste prévu pour cette opération.

Le dispositif selon l'invention est constitué d'une poutre disposée sous les rouleaux ou galets du couloir; cette poutre est articulée selon un axe parallèle auxdits rouleaux, elle est munie à son extrémité amont d'une butée de séparation et à son extrémité aval d'un patin de mise et de maintien en position active de la butée de séparation, et elle peut également comporter, à cette extrémité aval, une butée complémentaire de sécurité qui arrête la palette et permet un positionnement plus précis; ce dispositif comporte, en plus, des moyens qui permettent de limiter, voire supprimer toute possibilité de recul de la palette disposée au poste de prélèvement.

Selon un premier mode de réalisation, dans le cas d'un dispositif séparateur à bascule dont la butée de séparation est naturellement en position active de séparation, c'est-à-dire que la butée de séparation arrête automatiquement toute palette introduite dans le couloir de stockage, qu'il y ait ou non une palette au poste de prélèvement, le dispositif comporte, en aval de ladite butée de séparation, une butée anti-recul en forme d'ergot solidaire de la poutre, qui s'escamote du plan de circulation des palettes en même temps que la butée de séparation, laquelle butée anti-recul est située à une distance du patin et/ou de la butée aval de sécurité, qui est légèrement supérieure à la longueur de la palette.

Selon une autre variante de réalisation, dans le cas d'un dispositif séparateur à bascule dont la butée de séparation est naturellement en position inactive de séparation c'est-à-dire que une palette introduite dans le couloir, si ce couloir est vide, va directement jusqu'au poste de prélèvement et met la butée de séparation en position active de séparation, le dispositif comporte, en aval de ladite butée de séparation, une butée anti-recul constituée d'un ergot basculant articulé sur la poutre pour s'escamoter lors du passage d'une palette, reprenant automatiquement sa position active, lequel ergot est situé à une distance du patin et/ou de la butée de sécurité aval qui correspond sensiblement à la longueur d'une palette, la distance dudit ergot en position active à l'entrée dudit patin étant inférieure à la longueur d'une palette de façon à éviter une mise en position inactive intempestive de la butée de séparation lors d'un recul accidentel de la palette située au poste de prélèvement.

L'invention sera encore détaillée à l'aide de la description suivante et des dessins annexés, donnés à titre indicatif, et dans lesquels :
- la figure 1 représente, schématiquement, une portion de couloir de stockage dynamique avec un dispositif séparateur à bascule du type dans lequel la butée de séparation est naturellement en position active de séparation, qu'il y ait ou non une palette au poste de prélèvement ;
- la figure 2 représente le couloir de la figure 1 avec une palette chargée dans le couloir, laquelle palette reste en amont du poste de prélèvement, retenue par la butée de séparation du dispositif séparateur à bascule ;
- la figure 3 représente la manoeuvre de désactivation de la butée de séparation, par l'opérateur, pour faire progresser la palette placée dans le couloir comme représenté figure 2, jusqu'au niveau du poste de prélèvement ;
- la figure 4 représente la palette précédente en position normale au poste de prélèvement avec la butée de séparation en position active pour stopper toute nouvelle palette introduite dans le couloir ;
- la figure 5 montre le rôle du perfectionnement selon l'invention, qui permet d'éviter un mouvement de recul trop important de la palette au niveau du poste de prélèvement, tel que représenté aux différentes figures ci-avant ;
- la figure 6 représente une variante de réalisation dans laquelle la butée de séparation est naturellement en position inactive de séparation lorsque le poste de prélèvement est vide ;
- la figure 7 représente l'arrivée d'une palette au poste de prélèvement représenté figure 6, laquelle palette provoque la mise en position active de la butée de séparation ;
- la figure 8 illustre le phénomène provoqué par les moyens de l'invention dans le cas de ce second mode de réalisation.

On trouve sur toutes les figures, les rouleaux 1 ou galets du couloir de stockage dynamique ainsi que la traverse 2, solidaire du châssis, située à l'extrémité aval dudit couloir. Le dispositif à bascule 3 est constitué d'une poutre 4 qui s'étend longitudinalement sous les rouleaux 1 et qui comporte à son extrémité amont une butée de séparation 5 et, à son extrémité aval, un patin 6 et une butée de sécurité 7 à l'extrémité dudit patin, laquelle butée 7 permet un positionnement précis des palettes au poste de prélèvement schématisé par l'accolade 10.

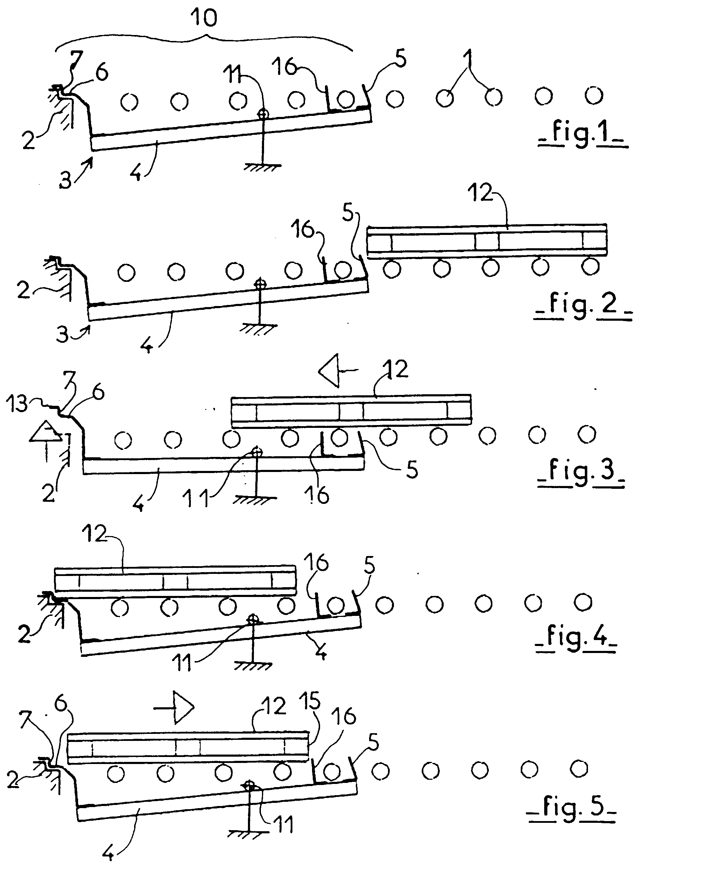

Tous ces éléments sont communs aux deux types de dispositifs séparateurs représentés figures 1 à 8.

Le dispositif séparateur représenté figures 1 à 5 est du type comportant une butée de séparation 5 qui est naturellement en position active de séparation. La poutre 4 est articulée autour d'un axe 11 porté par le bâti du couloir, lequel axe 11 est parallèle à l'axe des rouleaux 1 et il est situé dans la moitié amont de ladite poutre de façon à placer automatiquement par simple gravité, la butée de séparation 5 en position active c'est-à-dire dans une position où elle déborde du plan de circulation des palettes. Le patin 6 est normalement en appui sur la traverse 2 à l'extrémité aval du couloir.

Ainsi, comme représenté figure 2, une palette 12 introduite dans le couloir de stockage, parcourt ledit couloir et est automatiquement immobilisée par la butée de séparation 5, en amont du poste de prélèvement 10.

Lorsque l'opérateur souhaite introduire la palette 12 au poste de prélèvement, il manoeuvre le dispositif à bascule et en particulier la pédale d'extrémité 13 située en aval de la butée 7, en soulevant cette pédale ce qui a pour effet de faire basculer la poutre 4 autour de son axe 11 et d'escamoter la butée de séparation 5. La palette 12 progresse vers l'aval et pénètre au poste de prélèvement 10 par simple gravité.

La palette 12 termine sa course, comme représenté figure 4, en prenant appui sur le patin 6, et sur la butée aval de sécurité 7. Dans cette position, la butée de séparation 5 est à nouveau en position active, débordant du plan de circulation des palettes, prête à arrêter une nouvelle palette introduite dans la partie amont du couloir.

La figure 5 illustre la fonction des moyens selon l'invention. Lorsque la palette est chargée, disposée au poste de prélèvement 10, elle reste en position sur le patin 6 contre la butée 7 naturellement par simple gravité. Lorsqu'elle est pratiquement vide, l'intervention de l'opérateur pour prélever les dernières pièces ou paquets, peut provoquer un déplacement de la palette 12 comme montré par la flèche 14 ce qui peut avoir pour conséquence de déséquilibrer l'opérateur.

L'espace entre l'extrémité amont 15 de la palette 12 et la butée de séparation 5 est de l'ordre de plusieurs centimètres voire dizaines de centimètres, c'est-à-dire 10 à 20 cm.

Pour éviter un mouvement de recul trop important de la palette 12, la poutre 4 comporte, en aval de la butée de séparation 5, une butée anti-recul 16 qui se met automatiquement en position active c'est-à-dire dans une position où elle déborde du plan de circulation des palettes 12, lorsque la butée de séparation 5 est elle-même en position active.

Cette butée anti-recul 16 se présente sous la forme d'un ergot, comme la butée 5, solidaire de la poutre 4. Cette butée 16 se situe à une distance de l'entrée du patin 6 qui est sensiblement supérieure à la longueur de la palette 12.

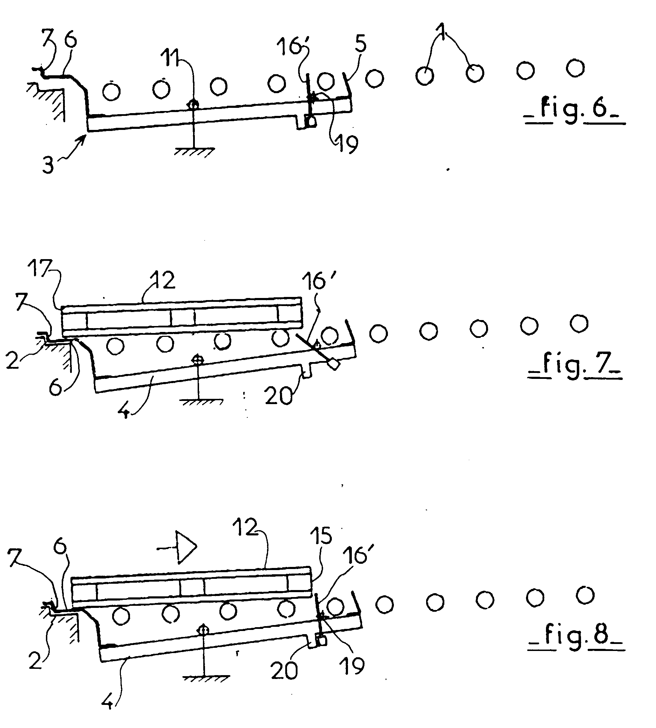

Les figures 6 à 8 représentent une variante de réalisation dans laquelle le dispositif séparateur à bascule est du type dans lequel la butée de séparation 5 est naturellement en position inactive de séparation lorsque le couloir et le poste de prélèvement ne comportent pas de palettes.

Ainsi, lorsque l'on introduit une palette dans le couloir de stockage alors que ce dernier est vide, comme représenté figure 6, la palette se déplace par simple gravité jusqu'au poste de prélèvement comme représenté figure 7.

Ce dispositif séparateur se différencie du précèdent représenté figures 1 à 5, par la position de l'axe 11 autour duquel pivote la poutre 4. L'axe 11 se situe dans la moitié aval de la poutre 4 ce qui a pour effet, par simple gravité, de mettre la butée de séparation 5 en position inactive c'est-à-dire de l'escamoter sous le plan de circulation des palettes 12. Dans ce cas, le patin 6 situé à l'avant et la butée 7 sont relevés, dégagés de la traverse aval 2.

Cette configuration est représentée figure 6.

La figure 7 montre une palette 12 en mouvement, sur le point d'atteindre sa position normale au poste de prélèvement 10, c'est-à-dire avec son extrémité aval en appui contre la butée de sécurité 7.

La figure 8 représente les moyens de l'invention en position active pour stopper un mouvement intempestif de recul de la palette 12 comme expliqué précédemment en liaison avec la figure 5.

Le dispositif à bascule représenté figures 6 à 8, comporte une butée anti-recul 16' en forme d'ergot basculant. Cet ergot est articulé autour d'un axe 19 qui est parallèle à l'axe 11, monté sur la poutre 4. Cet ergot 16' bascule automatiquement lorsque la palette 12 s'introduit au niveau du poste de prélèvement et en particulier lorsque cette palette atteint le patin 6; en effet, la palette fait basculer la poutre 4, et la butée de séparation 5 remonte en même temps que la butée anti-recul 16'.

La butée anti-recul 16' s'escamote automatiquement sans freiner la palette et, dès que la palette 12 atteint la butée 7, la butée anti-recul 16' reprend sa position normale active c'est-à-dire une position verticale dans l'exemple représenté figures 6 et 8 par simple gravité ; l'ergot constituant cette butée 16' étant maintenu en position active par un doigt 20 situé sur la poutre 4.

La distance entre la butée anti-recul 16', lorsqu'elle est en position active, et l'entrée du patin 6, est inférieure à la longueur de la palette 12. Cette particularité permet de maintenir constamment le dispositif de séparation en position active de séparation puisque le patin reste en appui sur la traverse aval 2 et, par voie de conséquence, la butée de séparation 5 est en position active c'est-à-dire qu'elle déborde du plan de circulation des palettes.

La butée anti-recul 16' est située à une distance de la butée aval 7 qui est sensiblement supérieure à la longueur des palettes 12, pour permettre lorsque ladite palette 12 atteint ladite butée 7, le basculement et la remise en position active de ladite butée anti-recul 16'.

## Revendications

1. Dispositif séparateur à bascule pour couloir de stockage dynamique, constitué d'une poutre (4) disposée sous les rouleaux (1) ou galets au niveau de l'extrémité aval dudit couloir, au poste de prélèvement (10), laquelle poutre est articulée selon un axe (11) parallèle à l'axe des rouleaux, elle est munie à son extrémité amont d'une butée de séparation (5) et à son extrémité aval d'un patin (6) dont le rôle est de mettre et de maintenir en position active ladite butée de séparation, caractérisé en ce que ladite poutre (4) comporte des moyens en forme de butée, pour limiter, voire supprimer, toute possibilité de recul de la palette (12).

2. Dispositif séparateur à bascule selon la revendication 1, dont la butée de séparation est naturellement en position active de séparation, caractérisé en ce qu'il comporte, en aval de ladite butée de séparation (5), une butée anti-recul (16) en forme d'ergot, solidaire de la poutre (4), escamotable en même temps que ladite butée de séparation, laquelle butée anti-recul est située à une distance du patin (6) et/ou de la butée aval (7), qui est sensiblement supérieure à la longueur de la palette (12).

3. Dispositif séparateur à bascule selon la revendication 1, dont la butée de séparation est naturellement en position inactive de séparation, caractérisé en ce qu'il comporte, en aval de ladite butée de séparation, une butée anti-recul (16') en forme d'ergot basculant articulé autour d'un axe (19) disposé sur la poutre (4), pour s'escamoter lors du passage de la palette (12) et en particulier en fin de parcours de ladite palette au niveau du poste de prélèvement (10), laquelle butée (16') reprend sa position active automatiquement lorsque ladite palette (12) atteint la butée aval (7), laquelle butée (16'), lorsqu'elle est en position active, est située à une distance de l'entrée du patin (6) qui est sensiblement inférieure à la longueur de la palette (12) et elle est située à une distance de la butée aval (7) qui est sensiblement supérieure à la longueur de ladite palette (12).
